# EUROPEAN PATENT SPECIFICATION

(11) **EP 2 109 555 B1**
(45) Date of publication and mention of the grant of the patent: **09.09.2015**
(21) Application number: 08700424.8
(22) Date of filing: 04.02.2008
(51) Int. Cl.: B60J 5/06

(54) **SIDE CURTAIN FOR TRUCK AND TRAILER BODIES**
SEITENPLANE FÜR LKW UND ANHÄNGER
RIDEAU LATÉRAL POUR CAMIONS ET SEMI-REMORQUES

(30) Priority: 05.02.2007 AU 2007900523 P
(43) Date of publication of application: 21.10.2009
(73) Proprietor: Transtech Research PTY, Ltd., Derrimut, Victoria 3030 (AU)
(72) Inventor: JURICIC, Sean, Sunbury, Victoria 3429 (AU); THOMAS, David, Magpie, Victoria 3352 (AU); MCMURTRIE, Stuart, Wheelers Hill, Victoria 3150 (AU)
(74) Representative: Papula Oy
(86) International application number: PCT/AU2008/000129
(87) International publication number: WO 2008/086584

(56) References cited:
- GB-A- 1 521 466
- US-A- 2 465 621
- US-A- 4 516 802
- US-A- 5 431 474
- US-B1- 7 086 685

## Description

### TECHNICAL FIELD

The present invention relates to curtain sided rigid type trucks and semitrailers and more particularly to side curtains for such truck and trailer bodies.

### BACKGROUND ART

Conventional side curtains on truck and trailer bodies are retained along the top edge on a rail system extending along the roof of the body in a manner whereby the curtain may be slid between the ends of the body. At one or both ends of the body the curtain is wrapped around a vertical pipe and the pipe is rotatable by a ratchet mechanism to tension the curtain in a horizontal direction. Along the bottom edge the curtain is tensioned in a vertical direction by a large number of closely spaced straps and buckles with hooks that engage underneath the coaming rail of the body. In the case of a 45 foot long trailer there is as many as 24 such straps. These straps and buckles require a significant amount of time to attach and tension, considerably increasing the time to load and unload a curtain sided truck or trailer.

More recently transport vehicle regulations have become more stringent in relation to side load restraints, and the conventional side curtains are no longer acceptable as such load restraints. In fact it is now necessary to provide more substantial load restraints on the inside of the curtains, and the curtains now serve primarily as visual and environmental protection of the load.

As a consequence of the above it is an object of the present invention to provide a side curtain for truck and trailer bodies which provides means for tensioning the curtain in a vertical direction whilst avoiding the need for the conventional large number of closely spaced buckles and straps.

The preamble of claim 1 is shown in document GB 1 521 466.

### DISCLOSURE OF THE INVENTION

The invention therefore provides a side curtain for truck or trailer bodies, said curtain having a bottom edge in the shape of a series of intersecting concave curves, where a point of intersection or apex between each of successive adjoining curves are at or near the lowermost points of said curtain and provide attachment points for tensioning said curtain in a vertical direction, wherein each attachment point is engagable by tensioning means actuatable at each point of intersection or apex to apply a downward force by which said curtain is tensioned in a vertical direction.

Preferably the curves are arcuate and the geometric centre of each arc is substantially below said bottom edge.

As will be evident hereinafter by having the geometric centre of the arcs substantially below the bottom edge creates shallow arcs enabling the curtain to be tensioned with only a few attachment points. This greatly reduces the time and effort required to open or close the curtain.

### BRIEF DESCRIPTION OF THE DRAWINGS

In order that the invention may be more readily understood a particular embodiment will now be described with reference to the accompanying drawings wherein:
Figure 1 is a perspective side view of a trailer showing a prior art side curtain in a closed position;
Figure 2 is a view similar to Figure 1 showing a trailer with a side curtain according to the invention, in a closed position; and
Figure 3 is an enlarged drawing of one attachment point for the side curtain shown in the circle "A' of Figure 2.

### MODES FOR CARRYING OUT THE INVENTION

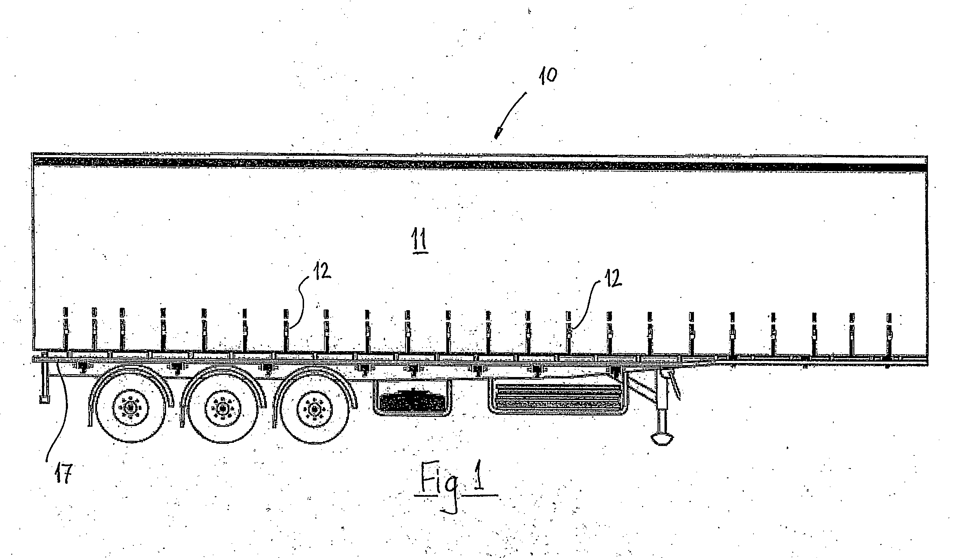

Referring to Figure 1 a large trailer 10 is shown with a conventional side curtain 11 which is tensioned horizontally and vertically in a known manner. Whilst horizontal tensioning cannot be clearly seen in Figure 1 it comprises a vertical pipe at one or both ends of the curtain and a ratchet mechanism for rotating the pipe. The curtain 11 wraps around the pipe and obtains horizontal tensioning as the pipe is rotated.

Vertical tensioning of the curtain 11 is provided by a large number of closely spaced curtain straps and buckles 12. The bottom of the straps 12 hook underneath a coaming rail of the trailer 10 and fastening of the buckles 12 provides a downward force on the curtain 11 to tension it in a vertical direction.

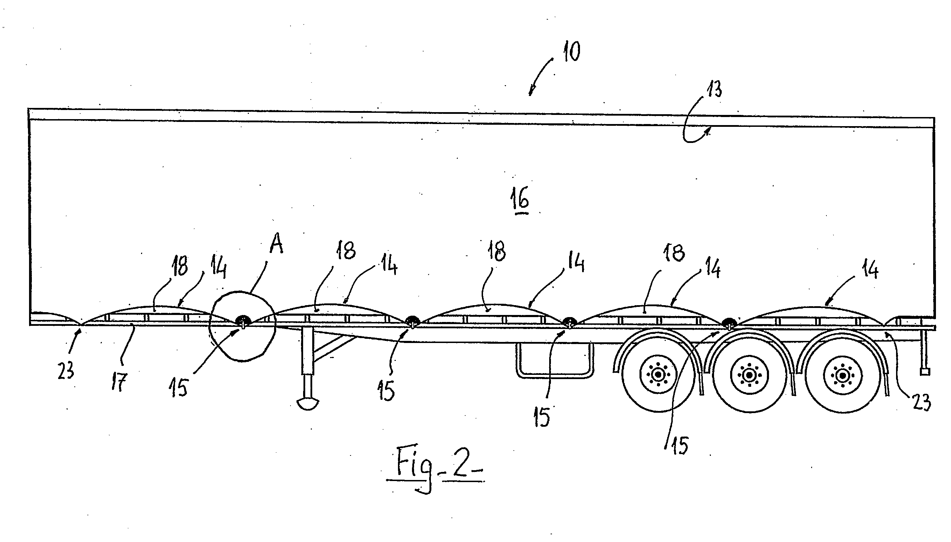

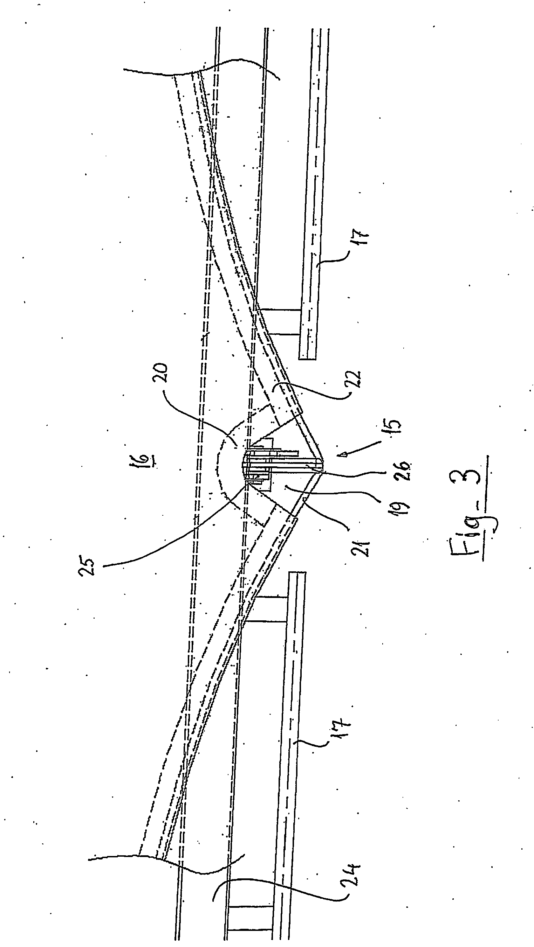

Referring now to Figure 2 a side curtain 16 according to the present invention is shown on a similar trailer 10. The attachment along the top edge 13 and vertical ends is the same as the conventional side curtain 11 shown in Figure 1 and is of the conventional construction described hereinabove. However, the bottom edge of the curtain 16 is made with a series of intersecting concave arcs 14 which in this embodiment comprise five in number. The geometrical centre of each arc 14 is substantially below the bottom edge of the curtain 16 which results in shallow arcs. The bottom edge of the curtain 16, in the vicinity of the apexes 15 of adjoining arcs 14, is adjacent a rope rail 17 of the trailer body. The rope rail 17 is supported below a coaming rail 24 in a conventional manner. The uppermost part of the arcs 14 is above the coaming rail 24 (Figure 3).

A skirt 18 is attached on the inside of the curtain 16 along the bottom edge for covering a gap which would otherwise occur between the bottom edge of the curtain 16 and the coaming rail 24 at points between the apexes 15 of the arcs 14. The skirt 18 ensures protection of the load from the external environment.

A rope or cable 21 (Figure 3) is enclosed in a pocket 22 along the bottom edge of the curtain 16. The cable or rope 21 is exposed at eyelets or apertures 19 in the curtain bottom edge located at each apex 15. The apertures 19 are reinforced by additional fabric 20 sewn or welded into the curtain 16 as shown. Also, the rope or cable 21 has an outer sleeve (not shown) at the exposed portions to assist in wear prevention. The cable 21 terminates at points 23 (Figure 2) where it connects to the trailer frame at the respective trailer ends. Adjustment means (not shown) are provided to allow adjustment to compensate for stretching of the cable 21.

Tensioning devices 25 are provided on the trailer body at the apexes 15 of the curtain 16. A preferred form of tensioning device is disclosed in Applicant's Australian patent application number 2007902574 entitled "Tensioning Device" and lodged on 15 May 2007. The device disclosed therein is mounted on the underside of the trailer floor and has a hook member 26 (Figure 3) that is able to be extended to project from the side of the trailer at a gap in the rope rail 17 so as to engage in an aperture 19. Once engaged in an aperture 19 the hook member 26 is retracted, that is, caused to move downwardly and slightly inwardly whereby it pulls on the sleeved rope or cable 21 in the curtain bottom edge, and hence tensions the curtain 16 in the vertical direction. The tensioning device 25 is actuated by an actuating means (not shown) that is preferably power operated by electrical, hydraulic or pneumatic means. A tensioning device 25 is located at each apex 15 of the closed side curtain 16 and the tensioning devices 25 may be operated simultaneously by a common control or may be operated individually by a separate control on each tensioning device 25.

The tensioning device 25 may also be manually operated.

Horizontal tensioning of the curtain 16 is performed in a conventional manner by winding on a vertical pole (not shown) at the forward and/or rear end of the curtain 16. When closing the curtain 16 the horizontal tensioning is performed first and then the vertical tensioning follows.

The number of intersecting arcs 14 along the bottom edge of the curtain 16 will depend upon the length of the trailer 10, the type of material of the curtain 16 and other factors such as the amount of force applied by the tensioning device 25. It is important that sufficient tension is applied to the curtain 16 in a vertical direction to maintain the curtain 16 in position against the side of the trailer body when the trailer 10 is moving at high speed. In other words, there must be sufficient intersecting arcs 14 and tensioning devices 25 to ensure that the curtain 16 does not flap outwardly away from the trailer body when the trailer 10 is moving at high speed.

Whilst the preferred form of the invention has concave arcs 14 along the bottom edge, other curves or shapes could be utilized. It will be readily apparent however that the optimum result is achieved with uniform concave arcs 14 insofar as applying a uniform vertical tension to the curtain 16. The benefits of the novel side curtain 16 according to this invention will be readily apparent to those skilled in the art. For example, the curtain 16 will be faster to open and close because of the vastly reduced number of tensioning points along the bottom edge of the curtain 16. In the described embodiment a 45 foot trailer has only four tensioning points as opposed to 24 with the prior art. This will reduce the time and cost of loading and unloading. Furthermore, the curtain 16 is likely to be less complex to operate and it lends itself to automation of the tensioning devices 25 at the apexes 15 of the arcs 14 or at the body corner posts. This results in a reduced occupational health and safety issue associated with opening and tensioning curtains 16 manually.

## Claims

1. A truck or trailer body including a side curtain (16), said curtain (16) having a bottom edge in the shape of a series of intersecting concave curves (14), **characterised in that** a respective point of intersection or apex (15) between each of successive adjoining curves (14) is at or near the lowermost points of said curtain and provide attachment points (19) for tensioning said curtain (16) in a vertical direction, wherein the truck or trailer body further includes tensioning means (25) actuatable at each point of intersection or apex (15) whereby each attachment point (19) is engaged to apply a downward force by which said curtain (16) is tensioned in a vertical direction; further including an aperture (19) in said curtain (16) at each point of intersection or apex (15), and a rope or cable (21) is slidably enclosed in said curtain (16) along said bottom edge and exposed at each aperture (19) to form a respective said attachment point (19), whereby said tensioning means (25) actuatable at each point of intersection or apex (15) is able to apply a downward force on said rope or cable (21) by which said curtain is tensioned in a vertical direction; and further wherein said tensioning means (25) comprises a power actuated hook at each point of intersection or apex (15) adapted to pass through said aperture (19) and engage said rope or cable (21) and then move so as to tension said curtain (16) in a vertical direction.

2. A truck or trailer body as defined in claim 1, wherein said attachment points (19) are arranged substantially at the level of a rope rail (17) below a coaming rail (24) of the truck or trailer body.

3. A truck or trailer body as defined in claim 1 or 2, wherein a skirt (18) is attached to the inside of said curtain (16) along said bottom edge to cover any gap between the curves of the bottom edge and the floor of the truck or trailer body.

4. A truck or trailer body as defined in claim 3, wherein said rope or cable (21) terminates at the extreme ends of the respective end curves and is adapted for connection to said truck or trailer body.

5. A truck or trailer body as defined in any one of the preceding claims, wherein said side curtain (16) is reinforced around each said aperture (19).

6. A truck or trailer body as defined in any one of the preceding claims, wherein said rope or cable (21) has adjustment means to compensate for stretching of the rope or cable (21).

7. A truck or trailer body as defined in claim 6, wherein the power actuated hook at each point of intersection or apex (15) is adapted to move outwardly to pass through said aperture (19) and engage said rope or cable (21) and then move downwardly and inwardly so as to tension said curtain (16) in a vertical direction.

## Patentansprüche

1. LKW- oder Anhänger-Korpus mit einer Seitenplane (16), wobei die Plane (16) eine Unterkante in Form einer Reihe von einander schneidender konkaver Bögen (14) aufweist, **dadurch gekennzeichnet, dass** ein entsprechender Schnitt- oder Scheitelpunkt (15) zwischen allen aufeinander folgenden, aneinander anschließenden Bögen (14) an oder nahe den untersten Punkten der Plane angeordnet ist und Anknüpfungspunkte (19) zum Spannen der Plane (16) in einer Vertikalrichtung schafft, wobei der LKW- oder Anhänger-Korpus ferner eine Spanneinrichtung (25) aufweist, die an jedem Schnitt- oder Scheitelpunkt (15) betätigbar ist, wobei an jedem Anknüpfungspunkt (19) angegriffen wird, um eine nach unten gerichtete Kraft aufzubringen, wodurch die Plane (16) in einer Vertikalrichtung gespannt wird; ferner mit einem Ausschnitt (19) in der Plane (16) an jedem Schnitt- oder Scheitelpunkt (15), wobei ein Seil oder Kabel (21) verschiebbar in der Plane (16) entlang der Unterkante eingeschlossen und an jedem Ausschnitt (19) derart freigelegt ist, dass jeweils ein entsprechender Anknüpfungspunkt (19) ausgebildet ist, wobei die an jedem Schnitt- oder Scheitelpunkt (15) betätigbare Spanneinrichtung (25) geeignet ist, eine nach unten gerichtete Kraft auf das Seil oder Kabel (21) aufzubringen, wodurch die Plane in einer Vertikalrichtung gespannt wird, und die Spanneinrichtung (25) ferner einen kraftbetriebenen Haken an jedem Schnitt- oder Scheitelpunkt (15) aufweist, der derart ausgelegt ist, dass er durch den Ausschnitt (19) durchführbar ist und mit dem Seil oder Kabel (21) in Eingriff gelangt, und sich dann derart bewegt, dass die Plane (16) in einer Vertikalrichtung gespannt wird.

2. LKW- oder Anhänger-Korpus nach Anspruch 1, wobei die Anknüpfungspunkte (19) im Wesentlichen auf dem Niveau einer Seil-Schiene (17) unter einer Süllschiene (24) des LKW- oder Anhänger-Korpus angeordnet sind.

3. LKW- oder Anhänger-Korpus nach Anspruch 1 oder 2, wobei eine Schürze (18) an der Innenseite der Plane (16) entlang der Unterkante derart angebracht ist, dass jeder Spalt zwischen den Bögen der Unterkante und dem Boden des LKW- oder Anhänger-Korpus bedeckt ist.

4. LKW- oder Anhänger-Korpus nach Anspruch 3, wobei das Seil oder Kabel (21) an den äußersten Enden der jeweiligen End-Bögen endet und zur Verbindung mit dem LKW- oder Anhänger-Korpus ausgelegt ist.

5. LKW- oder Anhänger-Korpus nach einem der vorhergehenden Ansprüche, wobei die Seitenplane (16) um jeden der Ausschnitte (19) verstärkt ist.

6. LKW- oder Anhänger-Korpus nach einem der vorhergehenden Ansprüche, wobei das Seil oder Kabel (21) Stelleinrichtungen zur Kompensation von Dehnungen des Seils oder Kabels (21) aufweist.

7. LKW- oder Anhänger-Korpus nach Anspruch 6, wobei der kraftbetriebene Haken an jedem Schnitt- oder Scheitelpunkt (15) derart ausgelegt ist, dass er sich zur Durchführung durch den Ausschnitt (19) und zum Eingreifen mit dem Seil oder Kabel (21) nach außen bewegt, und sich dann derart nach unten und innen bewegt, dass die Plane (16) in einer Vertikalrichtung gespannt wird.

## Revendications

1. Camion ou corps de remorque comportant un rideau latéral (16), ledit rideau (16) ayant un bord inférieur en forme d'une série de courbes concaves (14) qui se recoupent, **caractérisé en ce qu'**un point d'intersection ou sommet respectif (15) entre chacune des courbes attenantes successives (14) se situe aux points les plus bas dudit rideau ou à proximité de ceux-ci et fournit des points de fixation (19) pour la mise sous tension dudit rideau (16) dans une direction verticale, le camion ou corps de remorque comportant, en outre, des moyens de mise sous tension (25) actionnables à chaque point d'intersection ou sommet (15), chaque point de fixation (19) étant engagé pour appliquer une force vers le bas, par l'intermédiaire de laquelle ledit rideau (16) est tendu dans une direction verticale, une ouverture (19) dans ledit rideau (16) à chaque point d'intersection ou apex (15) et une corde ou un câble (21) inséré(e) de façon coulissante dans ledit rideau (16) le long dudit bord inférieur et apparent(e) à chaque ouverture (19) pour former un dit point de fixation respectif (19), ledit moyen de mise sous tension (25) actionnable à chaque point d'intersection ou sommet (15) étant apte à appliquer une force vers le bas sur ladite corde ou ledit câble (21), force, par l'intermédiaire de laquelle ledit rideau est tendu dans une direction verticale, et ledit moyen de tension (25) comprenant un crochet actionné par moteur à chaque point d'intersection ou sommet (15), crochet, qui est adapté à passer à travers ladite ouverture (19), à accrocher ladite corde ou ledit câble (21) et à se déplacer, ensuite, de sorte à tendre ledit rideau (16) dans une direction verticale.

2. Camion ou corps de remorque suivant la revendication 1, dans lequel lesdits points de fixation (19) sont disposés essentiellement au niveau d'une coulisse à corde (17) au-dessous d'une structure (24) du camion ou corps de remorque.

3. Camion ou corps de remorque suivant la revendication 1 ou 2, dans lequel une jupe (18) est fixée à l'intérieur dudit rideau (16) le long dudit bord inférieur, pour couvrir tout espace entre les courbes du bord inférieur et le plancher du camion ou du corps de remorque.

4. Camion ou corps de remorque suivant la revendication 3, dans lequel ladite corde ou ledit câble (21) se termine aux extrémités des courbes d'extrémité respectives et est adapté(e) pour être relié(e) audit camion ou corps de remorque.

5. Camion ou corps de remorque suivant une quelconque des revendications précédentes, dans lequel ledit rideau latéral (16) est renforcé autour de chaque dite ouverture (19).

6. Camion ou corps de remorque suivant une quelconque des revendications précédentes, dans lequel ladite corde ou ledit câble (21) présente des moyens de réglage pour compenser l'étirement de la corde ou du câble (21).

7. Camion ou corps de remorque suivant la revendication 6, dans lequel le crochet actionné par moteur à chaque point d'intersection ou sommet (15) est adapté à se déplacer vers l'extérieur pour passer à travers ladite ouverture (19) et accrocher ladite corde ou ledit câble (21), puis à se déplacer vers le bas et vers l'intérieur de sorte à tendre ledit rideau (16) dans une direction verticale.
